(19)

Europäisches
Patentamt
European
Patent Office
Office européen
des brevets

(11)  **EP 2 645 874 B1**

(12)  # EUROPEAN PATENT SPECIFICATION

(45) Date of publication and mention
of the grant of the patent:
**07.01.2015 Bulletin 2015/02**

(21) Application number: **11790948.1**

(22) Date of filing: **28.11.2011**

(51) Int Cl.:
*A23G 9/04* *(2006.01)*      *A23G 9/14* *(2006.01)*

(86) International application number:
**PCT/EP2011/071205**

(87) International publication number:
**WO 2012/072593 (07.06.2012 Gazette 2012/23)**

(54)  **PROCESS FOR THE MANUFACTURE OF AERATED FROZEN CONFECTIONS**

VERFAHREN ZUR HERSTELLUNG VON GEFRORENEN, MIT LUFT DURCHSETZTEN
SÜSSWAREN

PROCÉDÉ DE FABRICATION DE CONFISERIES GLACÉES AÉRÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2010 EP 10193603**

(43) Date of publication of application:
**09.10.2013 Bulletin 2013/41**

(73) Proprietors:
• **Unilever PLC**
**London EC4Y 0DN (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **POMEREN, Roland, Wilheimus, Johannes van
64646 Heppenheim (DE)**
• **SINCLAIR, Kirsty
Bedfordshire MK44 1LQ (GB)**
• **WIX, Loyd
Bedfordshire MK44 1LQ (GB)**

(74) Representative: **Warner, Guy Jonathan
Unilver PLC
Unilever Patent Group
Colworth House
Sharnbrook
Bedford, Bedfordshire MK44 1LQ (GB)**

(56) References cited:
**EP-A1- 1 400 176      EP-A1- 2 196 096
WO-A1-00/72697      US-A- 4 143 172
US-A- 5 345 781      US-B1- 6 423 359**

## Description

## Technical field

The present invention relates to a method for producing frozen aerated confections, such as ice cream. In particular, it relates to a low temperature extrusion method for manufacturing frozen aerated confections.

## Background to the invention

Low temperature extrusion is a process which can be used in the manufacture of frozen confections and is described for example in "Ice Cream", 6th Edition, Marshall, Goff & Hartel, page 190 and "The Science of Ice Cream", C. Clarke, Royal Society of Chemistry, Cambridge, 2004, pages 81-82. In low temperature extrusion, aerated, partially frozen ice cream leaves an ice cream freezer and is passed through a screw extruder as it is cooled to typically about -8°C or lower. The extruder applies a higher shear stress (and lower shear rate) to the ice cream than a conventional freezer, which means that it can operate at low temperatures when the ice cream has very high viscosity.

It would be convenient for the manufacture of aerated frozen confection products to employ low temperature extrusion techniques but we have found that certain aerated frozen confections are not suitable for this process. In particular, problems arise when using low temperature extrusion to prepare aerated frozen confections that contain fruit and/or that have an acidic taste such as citrus flavour ice creams or sherbets. The resulting products have poor visual appearances, an open and spongy structure, and there is poor contact between different streams in multi flavour combinations. Furthermore, the overrun of the mix that is achieved in the ice cream freezer has been found to be greatly reduced after low temperature extrusion. Conversely, these same aerated frozen confections that cannot be produced using low temperature extrusion are perfectly acceptable when prepared using standard techniques, e.g. continuous ice cream freezers followed by blast freezing and storage. There is therefore a requirement for an improved low temperature extrusion process for the production of aerated frozen confections, in particular those that contain fruit and / or that have acidic ingredients.

## Summary of the invention

We have found that the pH of the aerated frozen confection in the low temperature extrusion apparatus is a critical factor and that high quality aerated frozen confections can be prepared using a low temperature extrusion process provided that the mix within the extrusion apparatus has a particular pH. The products mentioned above that cannot be produced using standard cold extrusion processes all have a pH of between 4.0 to 5.5 pH. This low pH is believed to be due to the acidic components present in the frozen confections (e.g. from fruit pieces, fruit juice or from other acidic ingredients) and is lower than standard frozen confection products which have a pH of about 6.3. Although this low pH is associated with poor product quality, the pH cannot simply be raised to that of standard frozen confections (e.g. through the addition of an alkaline ingredient) because the products would lose their characteristic fruity and acidic taste. Despite the fact that the problem is caused by low pH, we have surprisingly found that if the pH of the product is actually lowered even further, the resulting products produced using low temperature extrusion are perfectly acceptable.

Accordingly, in a first aspect the invention provides a process for the manufacture of an aerated frozen confection comprising the steps of

a) preparing an aqueous mix comprising at least 1 wt% non fat milk solids,
b) homogenising and optionally pasteurising the mix,
c) partially freezing and aerating the mix to an overrun of from 50 to 200%, and
d) extruding the resulting aerated frozen confection in a screw extruder at a temperature of less than -8°C,

characterised in that the partially frozen and aerated mix has a pH of from 2.0 to 3.4.

Preferably the pH is from 2.3 to 3.3.

Preferably the mix comprises at least 2 wt% non-fat milk solids.

Preferably the frozen confection comprises at most 5 wt% of protein.

Preferably the frozen confection comprises at most 2.5 wt% of fat.

Preferably the frozen confection comprises fruit pieces.

Preferably step c) is carried out in a scraped surface heat exchanger.

Preferably the frozen confection has an overrun of from 75 to 150%.

Preferably the frozen confection is an ice cream or a sherbet.

In a second aspect the invention provides a product obtained or obtainable by the process of the first aspect.

**Detailed description of the invention**

All percentages, unless otherwise stated, refer to the percentage by weight, with the exception of percentages cited in relation to the overrun.

Standard manufacturing techniques for aerated frozen confections are well known. Frozen confection ingredients are typically mixed, subjected to homogenisation and pasteurisation, chilled to approximately 4°C and held in an ageing tank for approximately 2 hours or more. The aged mix is then typically passed through a scraped surface heat exchanger. Gas is also introduced into the scraped surface heat exchanger and the action of the dasher within the freezer barrel acts to aerate the frozen confection mix, i.e. gas is incorporated into the products to form air cells. The gas can be any gas but is preferably, particularly in the context of food products, a food-grade gas such as air, nitrogen or carbon dioxide. The extent of the aeration can be measured in terms of the volume of the aerated product. The extent of aeration is typically defined in terms of "overrun". In the context of the present invention, % overrun is defined in volume terms as:

**Table 0001**

$$\text{Overrun (\%)} = \frac{(\text{ volume of final aerated product} - \text{volume of unaerated mix })}{\text{volume of unaerated mix}} \times 100$$

The amount of overrun present in frozen confections will vary depending on the desired product characteristics but in the context of this invention the overrun is at most 200%, preferably at most 175%, more preferably at most 150%, more preferably still at most 125% and at least 50%, preferably at least 60%, more preferably at least 75%, more preferably still at least 100%.

The resulting aerated partially frozen confections are then dispensed from the scraped surface heat exchanger at approximately -5°C, collected in suitable containers and transferred to a blast freezer where the products are hardened.

The term low temperature extrusion is used to denote a cooling process wherein a material enters an extrusion apparatus at a temperature which is somewhat higher than that at the point of extrusion. Low temperature extrusion is also known as cold extrusion or ColdEx. Typically in the low temperature extrusion of frozen confections the mix enters the extrusion apparatus at about -5°C and is extruded at a temperature of about -8°C or less. Low temperature extrusion is a suitable process for the industrial scale production of frozen confections and is described for example in US 5,345,781, WO 00/72697, "Ice Cream", 6th Edition, *ibid* and "The Science of Ice Cream", *ibid.* As the mix is frozen within the low temperature extruder the viscosity of the mix greatly increases and the action of the extruding screw creates a very high shear stress.

In the process of the present invention, once the partially frozen aerated mix is extruded from the scraped surface heat exchanger it passes into the low temperature extrusion apparatus where it is further frozen and the resulting aerated frozen confection is extruded at a temperature of less than -8°C, preferably less than -9°C, more preferably less than -10°C. Preferably the resulting aerated frozen confection is extruded at a temperature of no less than -20°C, more preferably no less than -18°C, more preferably still no less than -15°C. Upon extrusion from the low temperature extrusion apparatus the aerated frozen confection is apportioned prior to storage and distribution.

The process of the invention is particularly directed towards low pH frozen confections such as those containing fruit pieces, fruit juice, acidulants or the like. The frozen confections may therefore comprise fruit pieces, fruit juice, acidulants or combinations thereof. These components may be added at any point during the process according to the invention, for example they can be added directly into the aqueous frozen confection mix following homogenisation and optional pasteurisation. Alternatively they can be added to the partially frozen and aerated mix. Preferably they are added to the partially frozen and aerated mix before it enters the low temperature extrusion apparatus because it is less viscous at this stage and these components can be easily blended in. The aerated frozen confections of the invention are preferably ice creams or sherbets.

As discussed above, there are difficulties in preparing aerated frozen confections that contain fruit pieces, fruit juice, acidulants and the like and/or that have an acidic taste such as citrus flavour ice creams or sherbets when using conventional low temperature extrusion. It is believed that this is due to the effect of the low pH (between 4.0 and 5.5 pH) of the partially frozen mix of these products within high shear stress conditions of the extrusion apparatus. Surprisingly, if the pH of the partially frozen mix is actually lowered even further then perfectly acceptable products can be obtained using low temperature extrusion. In the process according to the invention the partially frozen and aerated mix therefore has a pH of at most 3.4, preferably at most 3.3, more preferably at most 3.2, more preferably still at most 3.1, yet more preferably still at most 3.0 and at least 2.0, preferably at least 2.1, more preferably at least 2.3, more preferably still at least 2.5, yet more preferably at least 2.7.

The low pH of the frozen confection mix in the process of the invention can be achieved, for example, through the use of acidulants such as citric acid and although it is important that the pH of the mix is from 2.0 to 3.4 at the point at which it enters the cold extrusion apparatus, this pH can be achieved at earlier steps in the process of the invention. For example, the acidulant may be added to the mix during ageing or just prior to partially freezing and aerating the mix in the scraped surface heat exchanger. Preferably the required pH is achieved during the ageing step because the mixture is still liquid at this point and acidulants may be incorporated with ease; moreover the pH can be easily measured at this point using devices such as pH meters. In this application the pH of the mix can be measured at any stage. Before the mix is frozen, the pH meter can simply be used on the liquid mixture. After the mix has been frozen it should be melted prior to pH measurement. The acidulant is preferably added after any high temperature stage in the process, such as pasteurisation, in order to avoid effecting the affectiveness of the acidulant in controlling the pH.

Low temperature extrusion is suitable for the large scale production of standard aerated frozen confections and could, in principle, also be used for the production of aerated frozen confections that contain inclusions such as chocolate or biscuit pieces. When such inclusions are used they may be added at a variety of stages during the manufacturing process. For example, they can be added to the mix: prior to ageing; after ageing; prior to introducing the mix into the ice cream freezer; via the ice cream freezer itself; upon exiting the ice cream freezer; prior to introducing the mix into the low temperature extrusion apparatus; or even after the frozen confection has been extruded from the extrusion apparatus.

In the context of the present invention the term "frozen confection" means an edible confection made by freezing a mix of ingredients which includes water and milk solids. Frozen confections typically contain fat, non fat milk solids and sugars, together with other minor ingredients such as sweeteners, stabilisers, emulsifiers, colours and flavourings. Particularly preferred frozen confections are ice creams and sherbets. Ice cream typically contains fat, non-fat milk solids and sugars, together with other minor ingredients such as stabilisers, emulsifiers, colours and flavourings. Sherbets also contain milk protein but are low in fat.

Non fat milk solids contribute to the flavour and texture of frozen confections and usually come from either concentrated or dried sources. The frozen confections according to the invention contain at least 1 wt% non-fat milk solids, preferably at least 1.25 wt%, more preferably at least 1.5 wt%, more preferably still at least 2wt% and at most 10 wt%, more preferably at most 7.5 wt%, more preferably still at most 5 wt%. Plain concentrated (condensed, evaporated) skim milk may be used in the manufacture of frozen confections. It contains from 25 to 35% non fat milk solids and is prepared by evaporating water from skim milk using vacuum and heat.

Milk contains approximately 3.8 wt% fat, 3.2 wt% protein, 4.9 wt% lactose (milk sugar), and 0.7 wt% minerals, the rest being water. 75 to 80 % of milk protein is casein, the major components being $alpha_{S1}$-, $alpha_{S2}$-, beta- and kappa-casein. The remaining milk protein is largely whey which comprises alpha-lactalbumin, beta-lactalbumin, serum albumin, immune globulins, and some minor proteins. Sources of milk protein include milk, concentrated milk, milk powders (such as skimmed milk powder), caseins, caseinates (such as sodium and/or calcium caseinates) whey, whey powders and whey protein concentrates/isolates. Sources of milk protein generally also comprise other materials. For example, skimmed milk powder typically comprises 37% milk protein, 55% lactose and 8% milk minerals.

In the course of this work it has been found that the presence of large amounts of protein in the aerated frozen confection contributes to the problem of poor product quality in the low temperature extrusion process. Furthermore, protein may act as a buffer, inhibiting the action of the acidulant in lowering the pH. Consequently, the frozen confection preferably comprises at most 5 wt% of protein, more preferably at most 4 wt%, more preferably still at most 2 wt%, and preferably at least 0.05 wt%, more preferably at least 0.1 wt%, more preferably still at least 0.2 wt%, yet more preferably still at least 0.5 wt%

In the present invention, low fat levels are preferred for at least two reasons. Firstly health conscious consumers prefer low fat products. Secondly, the presence of fat in a frozen confection requires an emulsifier system such as protein and, as mentioned above, the amount of protein is preferably low, i.e. the frozen confection preferably comprises at most 5 wt% protein. Therefore the frozen confection preferably comprises at most 2.5 wt% fat, more preferably at most 2.0 wt%, more preferably still at most 1.5 wt%, yet more preferably still at most 1.0 wt%.

The present invention will now be further described with reference to the following non-limiting examples.

## Examples

Frozen confections according to the formulations of Table 1 were prepared. Comparative examples A, B, & C were Strawberry, Apricot and Peach ice creams respectively. Examples 1 and 2 according to the invention were Lemon and Strawberry ice creams.

**Table 1**

| Ingredient (wt%) | Formulation | | | | |
|---|---|---|---|---|---|
| | A | B | C | 1 | 2 |
| | | | | | |
| Citric acid monohydrate | 0.2 | 0.6 | 0.8 | 0.8 | 0.7 |
| | | | | | |
| Glucose fructose syrup LF9 78% | 5.2 | 7 | 8 | 10.5 | 5.2 |
| Glucose syrup 96DE (70% total solids) | 6.5 | 6 | 6 | 7.8 | 6.5 |
| Sucrose | 20.5 | 15 | 20.5 | 19 | 20.5 |
| Glucose 28DE Syrup | | 1.4 | | | |
| | | | | | |
| Carageenan (stabliser) | | | | 0.02 | |
| Guar gum (stabliser) | 0.04 | 0.28 | 0.05 | 0.05 | 0.04 |
| Locust bean gum (stabliser) | 0.13 | 0.1 | 0.2 | 0.1 | 0.13 |
| Mono / Di Glycerides SAT60 (emulsifier) | 0.3 | 0.3 | 0.17 | 0.17 | 0.3 |
| Satiagel (manufacturer Cargill) | 0.015 | 0.015 | 0.015 | | 0.015 |
| | | | | | |
| Skimmed milk concentrate (35% total solids) | 6.4 | 12 | 11 | 6.2 | 6.4 |
| Whey preparation (32% total solids) | | 10.9 | | 2.7 | |
| | | | | | |
| Coconut oil | 2.1 | 5 | 2.1 | 2.1 | 2.1 |
| | | | | | |
| Strawberry flavour | 0.025 | | | | 0.025 |
| Strawberry puree | 39.1 | | | | 39.1 |
| Apricot flavour | | 0.2 | | | |
| Apricot puree (12 Brix ) | | 10 | | | |
| Peach flavour | | | 0.25 | | |
| Peach puree (10 Brix) | | | 20.5 | | |
| Lemon flavour | | | | 0.2 | |
| | | | | | |
| Annatto Liquid (colourant) | | | 0.04 | | |
| Mixed carotenes (colourant) | | 0.08 | 0.04 | | |
| | | | | | |
| Water | To 100 | To 100 | To 100 | To 100 | To 100 |

Table 1 - Formulations of comparative examples (A, B, C) and examples according to the invention (1 & 2).

Formulations A, B, C, 1 and 2 were manufactured as follows.

The components of the formulations, with the exception of the fruit, flavours, acidulants, and colourants were blended together to form an aqueous blend which was heated to 80°C and mixed. The mix was homogenised using a Tetra Alex 400 homogeniser at 160 bar, pasteurised at 82°C for 26 seconds, then cooled to 5°C, and pumped into ageing tanks at which point any fruit, flavours, acidulants, and colourants were added. The mix was aged with stirring at 5°C for 72 hours in the tanks prior to use.

After ageing, the mix was passed into a scraped surface heat exchanger where it was partially frozen and aerated to an overrun of 60%. The apparatus used was a Crepaco W 312 GS with an open K30 1625 type dasher. The partially frozen aerated ice creams exited the freezer at an outlet temperature of -7.5°C and passed into the low temperature extrusion apparatus (Gerstenberg & Agger, Snow 350 zent). The inlet pressure was 9 bar, the inlet temperature was -7.5°C, and the extruder was operated at a torque level of 6500Nm at a speed of 6.4 rpm. The resulting frozen aerated ice creams then exited the extruder at an outlet pressure of 12.7 bar and an outlet temperature -13.6°C.

The partially frozen mixes of products A, B, & C were all prepared without difficulty using the standard processing techniques described and high overrun was achieved. pH was assessed by melting samples of the formulations which were then measured using a pH meter (Toledo MP220, serial number 216010M, manufactured by Mettler). Comparative examples A, B, and C all had a pH greater than 3.4 (3.5, 4 and 3.65 respectively). However, upon exit from the low temperature extrusion apparatus it was found that these formulations had poor structure and the aeration achieved in the partial freezing step was greatly reduced in the final product. In particular, the fine microstructure of the air cells that had been generated during the partial freezing and aeration had been lost with the air cells coalescing to form large, open, porous air pockets in the final product. As a result the products had a spongy texture and did not have the smooth creamy mouth-feel demanded of such frozen confections.

The partially frozen mixes of products 1 & 2 were also prepared without difficulty using the standard processing techniques described and high overrun was also achieved. In contrast however, the pH of examples 1 and 2 (measured as described above) were below 3.4 (2.94 and 2.97 respectively) and it was observed that the frozen confections resulting from these formulations had excellent organoleptic properties upon extrusion from the low temperature extrusion apparatus. Examples 1 and 2 both retained the aeration achieved prior to the introduction of the partially frozen mixes into the extrusion apparatus and also retained a fine air cell microstructure with small, evenly distributed air cells within the frozen confection. As a consequence, the formulations according to the invention that were prepared using the low temperature extrusion actually had acceptable organoleptic properties.

It can therefore be seen that certain low pH frozen confection products cannot be prepared using low temperature extrusion. Surprisingly however, if the formulation of these products is carefully controlled in order to actually achieve an even lower pH then low temperature extrusion becomes a viable processing option and as a result low pH frozen confections, such as those containing fruit pieces, fruit juice, and the like, and/or that have an acidic taste such as citrus flavour ice creams or sherbets, can now be prepared using the convenient and high-throughput process of low temperature extrusion.

## Claims

1. A process for the manufacture of an aerated frozen confection comprising the steps of

    a) preparing an aqueous mix comprising at least 1 wt% non fat milk solids,
    b) homogenising and optionally pasteurising the mix,
    c) partially freezing and aerating the mix to an overrun of from 50 to 200%, and
    d) extruding the resulting aerated frozen confection in a screw extruder at a temperature of less than -8°C,

    **characterised in that** the partially frozen and aerated mix has a pH of from 2.0 to 3.4.

2. A process according to claim 1 wherein the pH is from 2.3 to 3.3.

3. A process according to claim 1 or claim 2 wherein the aqueous frozen confection mix comprises at least 2 wt% non-fat milk solids.

4. A process according to any of the preceding claims wherein the frozen confection comprises at most 5 wt% of protein.

5. A process according to any of the preceding claims wherein the frozen confection comprises at most 2.5 wt% of fat.

6. A process according to any of the preceding claims wherein the frozen confection comprises fruit pieces.

7. A process according to any of the preceding claims wherein step c) is carried out in a scraped surface heat exchanger.

8. A process according to any of the preceding claims wherein the frozen confection has an overrun of from 75 to 150%.

9. A process according to any of the preceding claims wherein the frozen confection is an ice cream or a sherbet.

**Patentansprüche**

1.  Verfahren zum Herstellen eines mit Luft durchsetzten, gefrorenen Konfekts, die folgenden Schritte aufweist:

    a) Herstellen eines wässrigen Gemischs, das mindestens 1 Gew.-% fettfreie Milchfeststoffe aufweist,
    b) Homogenisieren und gegebenenfalls Pasteurisieren des Gemischs,
    c) teilweises Gefrieren und Durchlüften des Gemischs bis zu einem Overrun von 50 bis 200 %, und
    d) Extrudieren des entstandenen mit Luft durchsetzten, gefrorenen Konfekts in einem Schneckenextruder bei einer Temperatur von weniger als -8 °C,

    **dadurch gekennzeichnet, dass** das teilweise gefrorene und mit Luft durchsetzte Gemisch einen pH-Wert von 2,0 bis 3,4 aufweist.

2.  Verfahren nach Anspruch 1,
    wobei der pH-Wert 2,3 bis 3,3 beträgt.

3.  Verfahren nach Anspruch 1 oder 2,
    wobei das wässrige, gefrorene Konfektgemisch mindestens 2 Gew.-% fettfreie Milchfeststoffe aufweist.

4.  Verfahren nach einem der vorstehenden Ansprüche,
    wobei das gefrorene Konfekt höchstens 5 Gew.-% Protein aufweist.

5.  Verfahren nach einem der vorstehenden Ansprüche,
    wobei das gefrorene Konfekt höchstens 2,5 Gew.-% Fett aufweist.

6.  Verfahren nach einem der vorstehenden Ansprüche,
    wobei das gefrorene Konfekt Fruchtstücke aufweist.

7.  Verfahren nach einem der vorstehenden Ansprüche,
    wobei der Schritt c) in einem Kratzwärmeaustauscher durchgeführt wird.

8.  Verfahren nach einem der vorstehenden Ansprüche,
    wobei das gefrorene Konfekt einen Overrun von 75 bis 100 % aufweist.

9.  Verfahren nach einem der vorstehenden Ansprüche,
    wobei das gefrorene Konfekt Eiscreme oder Sorbet ist.

**Revendications**

1.  Procédé pour la fabrication d'une confiserie glacée aérée comprenant les étapes consistant

    a) à préparer un mélange aqueux comprenant au moins 1 % en poids de matières solides de lait écrémé,
    b) à homogénéiser et à pasteuriser éventuellement le mélange,
    c) à congeler partiellement et à aérer le mélange jusqu'à un dépassement de 50 à 200 %, et
    d) à extruder la confiserie glacée aérée résultante dans une extrudeuse à vis à une température inférieure à -8°C,

    **caractérisé en ce que** le mélange partiellement glacé et aéré présente un pH de 2,0 à 3,4.

2.  Procédé selon la revendication 1, dans lequel le pH est de 2,3 à 3,3.

3.  Procédé selon la revendication 1 ou la revendication 2, dans lequel le mélange aqueux de confiserie glacée comprend au moins 2 % en masse de matières solides de lait écrémé.

4.  Procédé selon l'une quelconque des revendications précédentes, dans lequel la confiserie glacée comprend au plus 5 % en poids de protéine.

5.  Procédé selon l'une quelconque des revendications précédentes, dans lequel la confiserie glacée comprend au plus 2,5 % en poids de graisse.

6. Procédé selon l'une quelconque des revendications précédentes, dans lequel la confiserie glacée comprend des morceaux de fruits.

7. Procédé selon l'une quelconque des revendications précédentes, dans lequel l'étape c) est réalisée dans un échangeur de chaleur à surface raclée.

8. Procédé selon l'une quelconque des revendications précédentes, dans lequel la confiserie glacée présente un dépassement de 75 à 150 %.

9. Procédé selon l'une quelconque des revendications précédentes, dans lequel la confiserie glacée est une crème glacée ou un sorbet.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5345781 A

- WO 0072697 A

**Non-patent literature cited in the description**

- **MARSHALL ; GOFF ; HARTEL.** Ice Cream. 190
- **C. CLARKE.** The Science of Ice Cream. Royal Society of Chemistry, 2004, 81-82

- Ice Cream
- The Science of Ice Cream. ICE CREAM